## Europäisches Patentamt
## European Patent Office
## Office européen des brevets

(19)

(11) Publication number: **0 057 547**
**B1**

(12) **EUROPEAN PATENT SPECIFICATION**

(45) Date of publication of patent specification: **25.07.84**

(51) Int. Cl.³: **B 29 D 23/02**

(21) Application number: **82300354.6**

(22) Date of filing: **25.01.82**

(54) **Stabilized core injection molding of plastic.**

(30) Priority: **30.01.81 US 230302**

(43) Date of publication of application:
**11.08.82 Bulletin 82/32**

(45) Publication of the grant of the patent:
**25.07.84 Bulletin 84/30**

(84) Designated Contracting States:
**AT BE CH DE FR GB IT LI NL SE**

(56) References cited:
**EP - A - 0 008 518**
**AU - A - 1 757 770**
**FR - A - 962 726**
**US - A - 2 434 594**

**KUNSTSTOFFE, Vol. 51, No. 10, 1961, München**
**H. GASTROW "Spritzgusswerkzeug für**
**Tablettenröhrchen", pages 678, 679**

(73) Proprietor: **SORENSEN, Jens Ole**
**P.O. Box 2274**
**Rancho Santa Fe, CA 92067 (US)**

(72) Inventor: **SORENSEN, Jens Ole**
**P.O. Box 2274**
**Rancho Santa Fe, CA 92067 (US)**

(74) Representative: **Wilson, Nicholas Martin et al,**
**WITHERS & ROGERS 4 Dyer's Buildings Holborn**
**London EC1N 2JT (GB)**

Courier Press, Leamington Spa, England.

## Description

This invention relates to a method of injection molding hollow plastics products and is particularly directed to stabilizing the core of the mold. The core is that part of the mold which forms the interior of a hollow molded product.

Discussion of Prior Art

Heretofore, it has been a great problem to stabilize the core of molds used for injection molding hollow products of plastics material with thin walls, such as test tubes, drinking glasses, flower pots, and pipes. In order to injection mold such products a large injection pressure is necessary which causes the core part of the mold to move in relation to the rest of the mold, resulting in products which do not have the intended dimensions.

Until now no practical solution has been found to the problem and, therefore, such products as mentioned above, are usually produced at a larger wall thickness than is necessary for the purpose of the product. The larger wall thickness permits the use of a lower injection pressure which puts less strain on the core part of the mold.

An object of the present invention is to provide a method of injection molding hollow products of plastics material in which the dimensions of the products may be controlled by stabilizing the core.

Summary of the Invention

According to the present invention there is provided a method of injection molding a hollow plastics product by injecting plastics material into a mold cavity having a core whereby the dimensions of the plastics product are controlled by stabilizing the core and comprising the steps of:

(a) injecting a molten first plastics material through a first gate into the mold cavity such that the cavity is not filled and such that the injected first plastics material does not obstruct injection from a second gate;

(b) cooling the injected first plastics material in the mold cavity;

(c) injecting, subsequent to injecting the first plastics material, a molten second plastics material through the second gate into the mold cavity such that the cooled injected first platics material stabilizes the core by impeding movement of the core caused by injecting the second plastics material and whereby the injected second plastics material fills the cavity and fuses with the previously injected first plastics material;

(d) cooling the injected second plastics material in the mold cavity to thereby solidify the fused product; and

(e) ejecting the solidified molded product.

From AU—A—17577/70 it is known to stabilize the core until the plastics material for forming the bottom part of the plastics product to be moulded is injected.

The invention will now be described by way of example with reference to the accompanying drawings in which;

Figure 1 is a schematic cross-sectional view of a first embodiment of a mold for the injection molding of a thin walled plastic product; and

Figure 2 is a schematic cross-sectional view of a second embodiment.

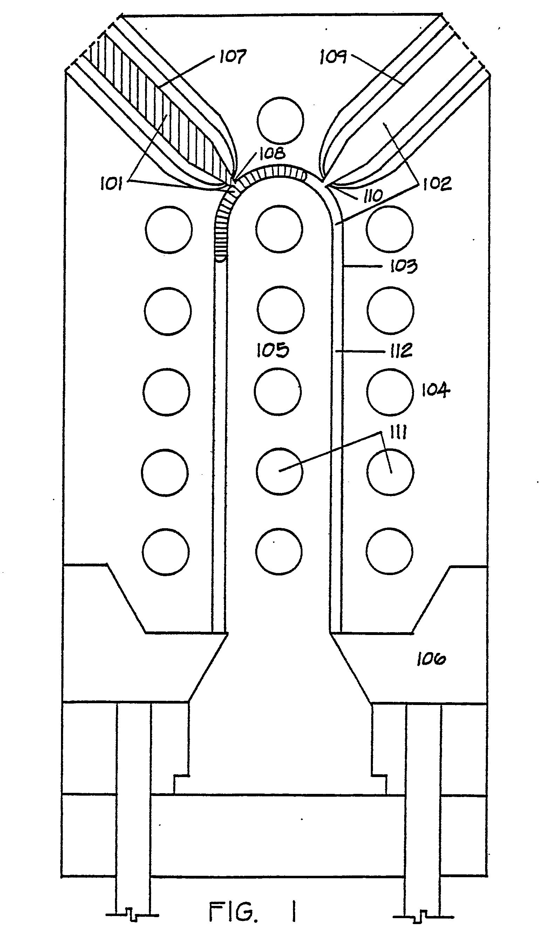

In the drawings the subdivisions of the mold are positioned in the known manner for injection molding. The molded product is in both Figures a test tube. Referring first to the embodiment of figure 1 a chilling cavity 103 of a mold is enclosed by a cavity part 104, a core part 105 which is centrally positioned in relation to the cavity part 104, and an ejector sleeve 106. Leading to the chilling cavity 103 is a first hot runner 107 with a first restriction gate 108 and a second hot runner 109 with a second restriction gate 110. Both the cavity part 104 and the core part 105 contain a cooling system 111. A first plastics material 101, such as polystyrene, is positioned in the hot runner 107 and a second plastics material 102, also such as polystyrene, is positioned in the hot runner 109. After molding the part of first plastics material 101 and the second plastics material 102 in the chilling cavity 103 make up a molded product 112.

The operation of a first preferred embodiment of this invention as illustrated in Figure 1 is as follows: a production cycle is started by injecting a hot molten first plastics material 101 from the first hot runner 107 through the first restriction gate 108, so that the material enters the chilling cavity 103 as illustrated. The injection pressure of the hot molten first plastics material 101 is adjusted at a low level so that the cavity 103 does not fill up and so that the injected first plastics material does not obstruct injection from the second restriction gate 110. The injected first plastics material 101 is cooled by the cooling system 111, but, before the injected first plastics material 101 is completely solidified, a hot molten second plastics material 102 is injected from the second hot runner 109 through the second restriction gate 110 so as to enter the chilling cavity 103. The injection pressure of the hot molten second plastics material 102 is adjusted at a higher level than the low level of the injection pressure of the hot molten first plastics material 101 whereby the injected second plastics material 102 fills the remainder of the cavity and fuses with the previously injected first plastics material.

When the hot molten first plastics material 101 is injected into the chilling cavity 103, even though the injection pressure is adjusted at a low level, a slight movement of the core part 105 is caused away from the first restriction gate 108 in relation to the cavity part 104.

However, since the second hot molten plastics material 102 is injected into the cavity 103 before the injected first plastics material is completely solidified, the core is forced back to its original central position by the higher level injection pressure of the injected second plastics material 102. Nevertheless, as the core is forced back, the cooled but not completely solidified injected first plastics material 101 impedes movement of the core part 105 beyond its original central position that would otherwise be caused by the high level injection pressure of the injected second plastics material 102. Also, since the hot molten second plastics material 102 is injected before the injected first plastics material 101 is completely solidified, the injected first plastics material 101 fuses better with the injected second plastics material 102. Moreover time is saved in the production cycle since it is not necessary to wait before inejcting the hot molten second plastics material 102 until the injected first plastics material 111 is completely solidified. Both the first injected plastics material 101 and the second injected plastics material 102 are cooled in the chilling cavity 103 by the cooling system 111, thereby creating a solidified fused molded product 112. The molded product 112 is ejected by the ejector sleeve 106 in the known manner for injection molding. The production cycle is thereafter repeated. If desired the single hot runner 109 may be supplemented by one or more additional runners appropriately placed about the chilling cavity 103.

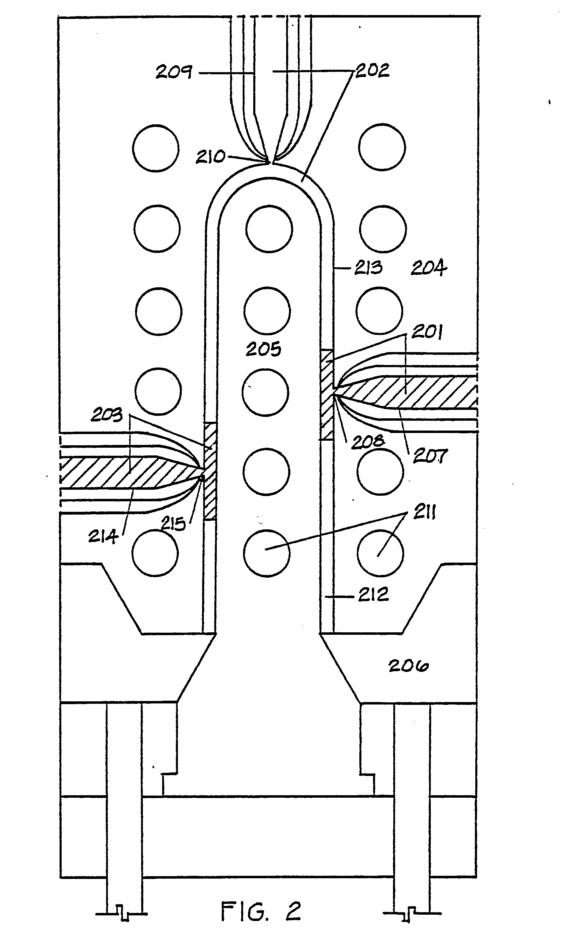

Turning now to the second embodiment of figure 2 there is illustrated a mold having a chilling cavity 213 enclosed by a cavity part 204, a core part 205 which is centrally positioned in relation to the cavity part 204, and an ejector sleeve 206. Leading into the chilling cavity 213 is a hot runner 207 with a restriction gate 208, a hot runner 214 with a restriction gate 215, and a hot runner 209 with a restriction gate 210. Both the cavity part 204 and the core part 205 contain a cooling system 211. A first plastics material 201, such as polypropylene, is positioned in the hot runner 207, a third plastics material 203, also such as polypropylene, is positioned in the hot runner 214, and a second plastics material 202, also such as polypropylene, is positioned in the hot runner 209. It will be understood that the expressions first, second and third plastics material neither refer to the order in which they are mentioned in this description nor refer to the order in which they are applied, but are used to differentiate and name three different masses of plastics material in accordance with the wording of the claims hereof.

The operation of a second preferred embodiment of this invention as illustrated in Figure 2 is as follows. A production cycle is started by injecting a hot molten first plastics material 201 and a hot molten third plastics material 203 simultaneously from the hot runner 207 and the hot runner 214 respectively through the restriction gate 208 and the restriction gate 215, so as to enter the chilling cavity 213 as illustrated. The injection period of the hot molten plastics materials 101 and 103 is adjusted equally to a short period so that the cavity 213 does not fill up and so that the first and third injected plastics materials 201 and 203 neither obstruct injection from the second restriction gate 210, nor obstruct injection from the other restriction gates respectively 208 or 215. The injected first and third plastics materials 201 and 203 respectively, are cooled by the cooling system 211, but before the inejcted first plastics material 201 and injected third plastics material 203 are completely solidified, a hot molten second plastic material 202 is injected from the second hot runner 209 through the second restriction gate 210 and into the chilling cavity 213. The injection period of the hot molten second plastics material 202 is adjusted to a longer period than the short period of the injection of the hot molten first and third plastics materials 201 and 203 respectively, whereby the injected second plastics material 202 fills the remainder of the cavity and fuses with the previously injected first and third plastics materials 201 and 203 respectively.

The first gate 208 and the second gate 215 are positioned on opposite sides of the core, whereby any movement of the core caused by the injection pressure of the first and third plastics materials 101 and 103 respectively as these plastics materials flow into the cavity 213, is at least partly balanced and the movement thereby at least partly counteracted. If desired this embodiment of the invention may be modified to have three or more simultaneously injecting restriction cavities on different sides of the core which at least partly balance each other and which do not fill up the entire cavity.

Since the hot molten second plastics material 202 is injected before the injected first and third plastics materials 201 and 203 respectively are completely solidified, the injected first and third plastics materials 201 and 203 respectively fuse better with the injected second plastics material 202. Moreover, time is saved in the production cycle since it is not necessary to wait before injecting the hot molten second plastics material 202 until the injected first and second plastics materials 201 and 203 are completely solidified. Nevertheless, even though the hot molten second plastics material 202 is injected before the injected first and third plastics materials 201 and 203 are completely solidified, the partly solidified injected first and third plastics materials 201 and 203 impede any movement of the core part 205 caused by injection of the second hot molten plastics material 202. The first, second and third plastics materials 201, 202 and 203 respectively, are cooled in the chilling cavity 213 by the cooling system 211, thereby creating a solidified fused molded product 212. The molded product is ejected by the ejector sleeve 206 in the known manner for injection molding. The production cycle is thereafter repeated.

If desired the second preferred embodiment of this invention illustrated in Figure 2 may be operated in an alternative manner as follows. A production cycle is started by injecting a hot molten third plastics material 203 from the third hot runner 214 through the third restriction gate 215, so as to enter the chilling cavity 213. The injection pressure of the hot molten third plastics material 203 in the third hot runner 214 is set at a high level but the third restriction gate 215 is provided with a small cross-sectional area which impedes the flow of the hot molten third plastics material 203. In this way the cavity 213 does not fill up and the injected third plastics material 203 does not obstruct injection either from the first restriction gate 208 or the second restriction gate 210. The injected third plastics material is cooled by the cooling system 211, but before the injected third plastics material 203 is completely solidified, a hot molten first plastics material 201 is injected from the first hot runner 207 through the restriction gate 208 and into the chilling cavity 213. The injection pressure of the hot molten first plastics material 201 in the first hot runner 207 is set at a high level like the injection pressure of the hot molten third plastics material 203 in the third hot runner 214. In addition, the first restriction gate 208 is also provided with a small cross-sectional area which impedes the flow of the hot molten first plastics material 201 through the restriction gate 208 so that the cavity 213 still does not fill up, and the injected first plastics material 201 does not obstruct injection from the second restriction gate 210. The injected first plastics material 201, in this alternative method, does not fuse with the previously injected third plastics material 203, but this may be possible if desired.

When the hot molten third plastics material 203 is injected into the chilling cavity 213, the flow is impeded by the small cross-sectional area of the third restriction gate 215. However, even at this impeded flow level the injected third plastics material 203 causes a slight movement of the core part 205 in a direction away from the third restriction gate 215, but, since the hot molten first plastics material 201 is injected before the hot molten third plastics material 203 is completely solidified, the core is forced back to its original central position by the injection pressure of the injected first plastics material 201. Nevertheless, as the core is forced back, the state of the cooled, not completely solidified injected third plastics material 203 is such that it impedes movement of the core part 205 caused by the injection pressure of the injected first plastics material 201 beyond the central position of the core. Hereafter, a hot molten second plastics material 202 is injected from the second hot runner 209 through the second restriction gate 210 and thereby also enters the chilling cavity 213.

The second restriction gate 210 does not have a small cross-sectional area so the flow of the second hot molten plastics material 202 is not particularly impeded whereby the injected second plastics material 202 fills the remainder of the cavity and fuses with the previously injected third plastics material 203 and previously injected first plastics material 201. As the second hot molten plastics material 202 is injected through the second restriction gate 210 into the chilling cavity 213, the cooled injected third and first plastics materials 203 and 201 respectively impede any movement of the core part 205 caused by the pressure of the injected second plastics material 202. The first, second and third injected plastics materials 201, 202 and 203 are now cooled in the chilling cavity 213 by the cooling system 211, thereby creating a solidified fused molded product 212. The molded product 212 is ejected by the ejector sleeve 206 in the traditional manner for injection molding, The production cycle is thereafter repeated.

## Claims

1. A method of injection molding a hollow plastics product by injecting plastics material (101, 102, 201, 202, 203) into a mold cavity (103, 213) having a core (105, 205) whereby the dimensions of the plastics product (112, 212) are controlled by stabilizing the core and comprising the steps of:

(a) injecting a molten first plastics material (101, 201) through a first gate (108, 208) into the cavity such that the cavity is not filled and such that the injected first plastics material does not obstruct injection from a second gate (110, 210);

(b) cooling the injected first plastics material in the mold cavity;

(c) injecting subsequent to injecting the first plastics material a molten second plastics material (102, 202) through the second gate into the mold cavity such that the cooled injected first plastics material stabilizes the core by impeding movement of the core caused by injecting the second plastics material and whereby the injected second plastics material fills the cavity and fuses with the previously injected first plastics material;

(d) cooling the injected second plastics material in the mold cavity to thereby solidify the fused product; and

(e) ejecting the solidified molded product.

2. A method according to Claim 1 whereby the first plastics material (101, 201) is injected at an injection pressure less than the injection pressure of the second plastics material (102, 202).

3. A method according to Claim 1 or 2 whereby the first plastics material (101, 201) is injected for a period less than the period of injecting the second plastics material (102, 202).

4. A method according to Claim 1, 2 or 3 whereby the first plastics material (101, 201) has the same chemical composition as the second plastics material (102, 202).

5. A method according to any one of the preceding Claims whereby the injection of the second plastics material (102, 202) is started before the injected first plastics material (101, 201) is completely solidified.

6. A method according to Claim 1 comprising the additional steps of:

(f) injecting a third molten plastics material (203) through a third gate (215) into the mold cavity (213) such that the cavity is not filled and such the the injected third plastics material does not obstruct injection from the first gate (208) and second gate (210); and

(g) cooling the injected third plastics material in the mold cavity.

7. A method according to Claim 6 whereby the third molten plastics material (203) and the first molten plastics material (201) are injected simultaneously through the third gate (215) and through the first gate (208) respectively, and where said third gate and first gate are positioned on different sides of the core (205) whereby any movement of the core caused by injecting the third plastics material and the first plastics material is at least partly counteracted.

8. A method according to Claim 6 whereby the third molten plastics material (203) is injected prior to injecting the first plastics material (201), and the cooled injected third plastics material impedes movement of the core (205) caused by injecting the first plastics material.

9. A method according to Claim 1 whereby the injection pressure of the first plastics material (101, 201) is approximately the same as the injection pressure of the second plastics material (102, 202), but the first gate (108, 208) has a smaller cross-sectional area than the second gate (110, 210) whereby the cavity (103, 203) is not filled by the injected first plastics material.

**Revendications**

1. Procédé de moulage par injection d'un article plastique creux par injection de matière plastique (101, 102, 201, 202, 203) dans le cavité d'un moule (103, 213) muni d'un noyau (105, 205) selon lequel les dimensions de l'article plastique (112, 212) sont contrôlées par stabilisation du noyau, et qui comprend les étages suivantes:

a) injection d'une première matière plastique fondue (101, 201) par une première ouverture (108, 208) dans la cavité de telle façon que la cavité ne soit pas remplie et de telle façon que la première matière plastique injectée ne fasse pas obstacle à l'injection venant d'une seconde ouverture (110, 210);

b) refroidissement de la première matière plastique injectée dans la cavité du moule;

c) injection subséquente à l'injection de la première matière plastique d'une seconde matière plastique fondue (102, 202) par le seconde porte dans la cavité du moule, de telle façon que la première matière plastique injectée et refroidie stabilise le noyau en empêchant tout mouvement du noyau du fait de l'injection de la seconde matière plastique, la seconde matière plastique injectée remplissant la cavité et s'amalgamant avec la première matière plastique précédemment injectée;

d) refroidissement de la seconde matière plastique injectée dans la cavité du moule pour solidifier le produit amalgamé;

e) éjection du produit moulé et solidifié.

2. Procédé selon la revendication 1, selon lequel la première matière plastique (101, 201) est injectée à une pression inférieure à la pression d'injection de la seconde matière plastique (102, 201).

3. Procédé selon la revendication 1 ou la revendication 2, selon lequel la première matière plastique (101, 201) est injectée pendant une durée inférieure à la durée d'injection de la seconde matière plastique.

4. Procédé selon l'une quelconque des revendications 1 à 3, selon lequel la première matière plastique (101, 201) a la même composition chimique que la seconde matière plastique.

5. Procédé selon l'une quelconque des revendications précédentes, selon lequel on commence l'injection de la seconde matière plastique (102, 202) avant solidification complète de la première matière plastique injectée.

6. Procédé selon la revendication 1 qui comporte les étapes additionnelles suivantes:

f) injection d'une troisième matière plastique fondue (203) par une troisième ouverture (215) dans la cavité du moule (213) de telle sorte que la cavité ne soit pas remplie et que la troisième matière plastique injectée ne fasse pas obstacle à l'injection venant de la première ouverture (208) et de la deuxième ouverture (210) et

g) refroidissement de la troisième matière plastique injectée dans la cavité du moule.

7. Procédé selon la revendication 6, selon lequel latroisième matière plastique fondue (203) et la première matière plastique fondue (201) sont injectées simultanément respectivement par la troisième ouverture (215) et par la première ouverture (208) et lesdites troisième et première ouvertures sont disposées sur différents côtés du noyau (205) ce qui permet de contrecarrer, au moins partiellement, tout mouvement du noyau provenant de l'injection de la troisième et de la première matières plastiques.

8. Procédé selon la revendication 6, selon lequel la troisième matière plastique fondue (203) est injectée avant que soit injectée la première matière plastique (201) et la troisième matière plastique injectée refroidie faisant obstacle à tout mouvement du noyau (205) causé par l'injection de la première matière plastique.

9. Procédé selon la revendication 1, selon lequel la pression d'injection de la première matière plastique (101, 201) est approximativement la même que la pression d'injection de la seconde matière plastique (102, 202), la première ouverture (108, 208) ayant toutefois une section inférieure à celle de la seconde ouverture, ce qui fait que la cavité (103, 213) n'est pas remplie par la première matière plastique injectée.

## Patentansprüche

1. Verfahren zum Sprtizgießen eines hohlen Kunstoff-Produckts durch Einspritzen von Kunststoff-Material (101, 102, 201, 202, 203) in einen Formenhohlraum (101, 213), der einen Kern (105, 205) aufweist, wobei die Abmessunger des Kunstoff-Products (112, 212) durch Stabilisieren des Kerns kontrolliert werden, umfassend die Schritte:

(a) Einspritzen eines geschmolzenen ersten Kunststoff-Materials (101, 201) durch ein erstes Tor (108, 208) in den Hohlraum derart, daß der Hohlraum nicht gefüllt wird, und derart, daß das eingespritzte erste Kunststoff-Material die Einspritzung von einem zweiten Tor (110, 210) nicht behindert;

(b) Kühlen des eingespritzten ersten Kunststoff-Materials in dem Formenhohlraum;

(c) Einspritzen eines geschmolzenen zweiten Kunststoff-Materials (102, 202) in den Formenhohlraum durch das zweite Tor nach Einspritzen des ersten Kunststoff-Materials derart, daß das gekühlte eingespritzte erste Kunststoff-Material den Kern durch Erschweren einer Bewegung des Kerns als Folge des Einspritzens des zweiten Kunststoff-Materials stabilisiert, und wobei das eingespritzte zweite Kunststoffe-Material den Hohlraum füllt und mit dem zuvor eingespritzten ersten Kunststoff-Material verschmilzt;

(d) Kühlen des eingespritzten zweiten Kunststoff-Materials in dem Formenhohlraum, um dadurch das verschmolzene Produkt zu verfestigen; und

(e) Auswerfen des verfestigen geformten Produkts.

2. Verfahren nach Anspruch 1, bei dem das erste Kunststoff-Material (101, 201) mit einem Einspritzdruck eingespritzt wird, der kleiner ist als der Einspritzdruck des zweiten Kunststoff-Materials (102, 202).

3. Verfahren nach Anspruch 1 oder 2, bei dem das erste Kunststoff-Material während einer Zeitdauer eingespritzt wird, die kleiner ist als die Zeitdauer des Einspritzens des zweiten Kunststoff-Materials.

4. Verfahren nach Anspruch 2 oder 3, bei dem das erste Kunststoff-Material (101, 201) diselbe chemische Zusammensetzung besitzt wie das zweite Kunststoff-Material (102, 202).

5. Verfahren nach einem der vorhergehenden Ansprüche, bei dem das Einspritzen des zweiten Kunststoff-Materials (102, 202) begonnen wird, bevor das eingespritzte erste Kunststoff-Material (101, 201) vollkommen verfestigt ist.

6. Verfahren nach Anspruch 1, umfassend die zusätzlichen Schritte:

(f) Einspritzen eines dritten geschmolzenen Kunststoff-Materials (203) durch ein drittes Tor (215) in den Formenhohlraum (213) derart, daß der Hohlraum nicht gefüllt wird, und derart, daß das eingespritzte dritte Kunststoff-Material nicht das Einspritzen vom ersten Tor (208) und zweiten Tor (210) behindert; und

(g) Kühlen des eingespritzten dritten Kunststoff-Materials in dem Formenhohlraum.

7. Verfahren nach Anspruch 6, bei dem das dritte geschmolzene Kunststoff-Material (203) und das erste geschmolzene Kunststoff-Material (201) gleichzeitig durch das dritte Tor (215) bzw. durch das erste Tor (208) eingespritzt werden, und wo das dritte Tor und das erste Tor an verschiedenen Seiten des Kerns (205) positioniert sind, wodurch jeder Bewegung des Kerns als Folge des Einspritzens des dritten Kunststoff-Materials und des ersten Kunststoff-Materials zumindest teilweise entgegengewirkt wird.

8. Verfahren nach Anspruch 6, bei dem das dritte geschmolzene Kunststoff-Material (203) vor dem Einspritzen des ersten Kunststoff-Materials (201) eingespritzt wird, und das gekühlte eingespritzte dritte Kunststoff-Material eine Bewegung des Kerns (205) als Folge des Einspritzens des ersten Kunststoff-Materials erschwert.

9. Verfahren nach Anspruch 1, bei dem der Einspritzdruck des ersten Kunststoff-Materials (101, 201) annähernd gleich ist wie der Einspritzdruck des zweiten Kunststoff-Materials (102, 202), aber das erste Tor (108, 208) einen kleineren Querschnittsbereich hat als das zweite Tor (110, 210), wodurch der Hohlraum (103, 213) nicht mit dem eingespritzten ersten Kunststoff-Material gefüllt wird.

FIG. 1

FIG. 2

0 057 547

2